**Europäisches Patentamt**

**European Patent Office**

**Office européen des brevets**

(11) Numéro de publication: **0 314 561**
**A1**

## DEMANDE DE BREVET EUROPEEN

(21) Numéro de dépôt: **88402683.2**

(22) Date de dépôt: **25.10.88**

(51) Int. Cl.⁴: **B 60 K 17/16**

(30) Priorité: **27.10.87 FR 8714810**

(43) Date de publication de la demande:
**03.05.89 Bulletin 89/18**

(84) Etats contractants désignés: **AT DE ES GB IT**

(71) Demandeur: **REGIE NATIONALE DES USINES RENAULT**
**Boîte postale 103 8-10 avenue Emile Zola**
**F-92109 Boulogne-Billancourt (FR)**

(72) Inventeur: **Doison, Jean-Claude**
**2, avenue de Versailles**
**F-92500 Rueil Malmaison (FR)**

**Bagard, Michel**
**33, La Gaillarderie**
**F-78590 Noisy Le Roi (FR)**

**Boutant, Jean-Jacques**
**44, rue Charles Drot**
**F-92500 Rueil Malmaison (FR)**

(74) Mandataire: **Chassagnon, Jean-Alain et al**
**REGIE NATIONALE DES USINES RENAULT (S.0267)**
**F-92109 Boulogne-Billancourt Cédex09 (FR)**

(54) **Dispositif de pont d'essieu de véhicule automobile.**

㊼ 1 - Dispositif de pont d'essieu de véhicule automobile comportant un couple conique dont la couronne (7) est montée dans un carter de pont (1) et sur un flasque (2) qui se centre et se fixe sur ledit carter de pont (1) caractérisé en ce qu'un carter d'entrée (3) vient fermer ledit carter de pont (1), sur lequel il se centre et se fixe, ledit carter d'entrée (3) supportant un couple de pignons de descente (4) et (5) par l'intermédiaire de roulements (11, 12, 13, 14), le pignon de descente menant (4) étant monté sur un arbre d'entrée (17, 23).

Le pignon de descente mené (5) étant monté sur le pignon d'attaque (6) du couple conique, de manière à pouvoir moduler à la demande la distance dans le plan vertical entre l'axe d'entrée (9) du mouvement et l'axe (10) du différentiel.

EP 0 314 561 A1

Bundesdruckerei Berlin

## Description

### DISPOSITIF DE PONT D'ESSIEU DE VEHICULE AUTOMOBILE

La présente invention se rapporte à un du dispositif de pont d'essieu de véhicule automobile qui s'applique en particulier sur des véhicules à quatre roues motrices.

Dans les véhicules automobiles à propulsion et à quatre roues motrices, il est nécessaire de prévoir l'encombrement pour l'arbre de transmission longitudinal et pour la pont de l'essieu arrière ou de l'essieu avant suivant le cas. Dans les systèmes de pont classique, cela nécessite un encombrement dans le plan vertical relativement important qui, dans certains cas, peut interférer avec le débattement du train arrière du véhicule.

Dans les véhicules dits "tous terrains", avec une garde au sol élevée, cela n'est pas trop gênant. En revanche, dans les véhicules de tourisme avec une garde au sol faible, on rencontre alors des problèmes de mise en place de la transmission que l'on peut difficilement résoudre par les systèmes classiques.

Le but de la présente invention est de proposer un dispositif de pont d'essieu de véhicule automobile qui permette d'adapter la position verticale de l'arbre de transmission longitudinal par rapport à l'axe du pont de manière à avoir un encombrement vertical adéquat.

Selon un mode de réalisation de l'invention, le dispositif de pont d'essieu de véhicule automobile comporte un couple conique dont la couronne est montée dans un carter de pont et sur un flasque qui se centre et se fixe sur ledit carter de pont.

Un carter d'entrée vient fermer ledit carter de pont, sur lequel il se centre et se fixe, ledit carter d'entrée supportant un couple de pignons de descente par l'intermédiaire de roule ments, le pignon de descente menant étant monté sur un arbre d'entrée.

Le pignon de descente mené est monté sur le pignon d'attaque du couple conique, de manière à pouvoir moduler à la demande la distance dans le plan vertical entre l'axe d'entrée du mouvement et l'axe du différentiel.

Selon un mode de réalisation de l'invention, le pignon d'attaque est monté sur deux roulements à rouleaux coniques et est bloqué axialement au moyen d'une vis à haute limite élastique qui coopère avec une rondelle d'appui et une cale de réglage.

Selon un mode de réalisation de l'invention, l'arbre d'entrée est monté sur deux roulements à rouleaux coniques et est bloqué axialement au moyen d'une vis à haute limite élastique qui coopère avec une entretoise, une cale de réglage et une rondelle d'appui.

Selon un mode de réalisation de l'invention, l'arbre d'entrée est monté sur deux roulements à rouleaux coniques et est bloqué axialement au moyen d'une vis a haute limite élastique qui coopère avec une cale de réglage disposée à l'intérieur du pignon de descente menant et une rondelle d'appui.

Selon une variante de l'invention, l'arbre d'entrée forme avec une bride une seule et même pièce.

Selon une variante de l'invention, une bride est montée a l'extrémité de l'arbre d'entrée avec lequel elle est solidaire en rotation au moyen de cannelures, un circlips bloquant ladite bride dans le sens axial par rapport audit arbre d'entrée.

Le dispositif de pont d'essieu, selon l'invention, présente ainsi l'avantage de permettre d'adapter la position de l'arbre d'entrée de mouvement par rapport à l'axe du différentiel. De cette manière, on peut ainsi facilement moduler cet entraxe dans le plan vertical et concevoir des architectures du type à quatre roues motrices sur des véhicules automobiles à faible garde au sol.

D'autres caractéristiques et avantages de la présente invention ressortiront de la description qui suit les modes de réalisation donnés à titre d'exemple en référence aux dessins annexés sur lesquels :

- la figure 1 est une coupe longitudinale de l'ensemble du dispositif selon l'invention,
- la figure 2 est une coupe suivant 2-2 de la figure 1,

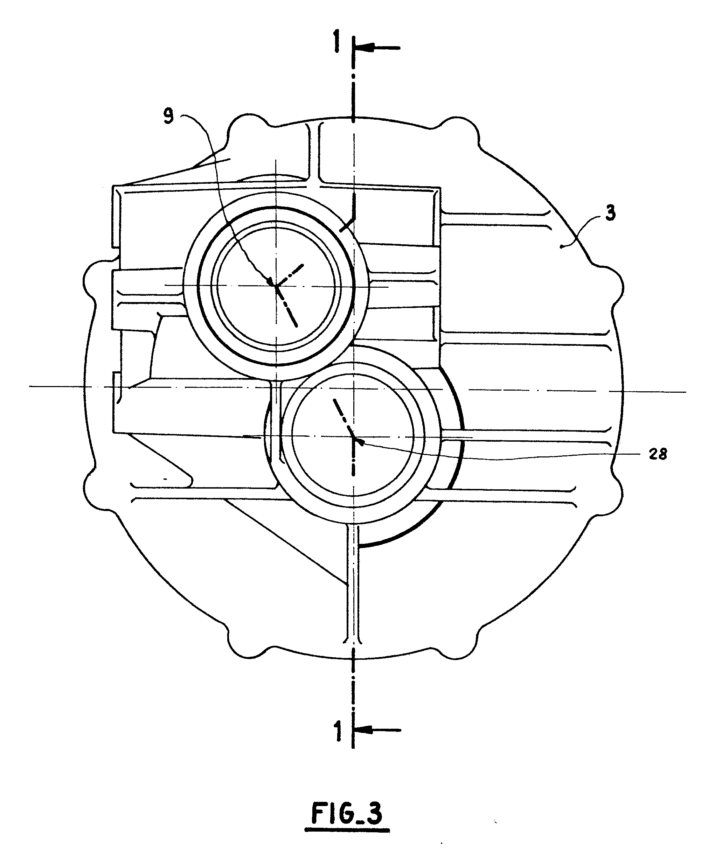

- la figure 3 est une vue externe en bout de la figure 1,
- la figure 4 est une coupe partielle analogue à la figure 1 d'une variante de l'invention.

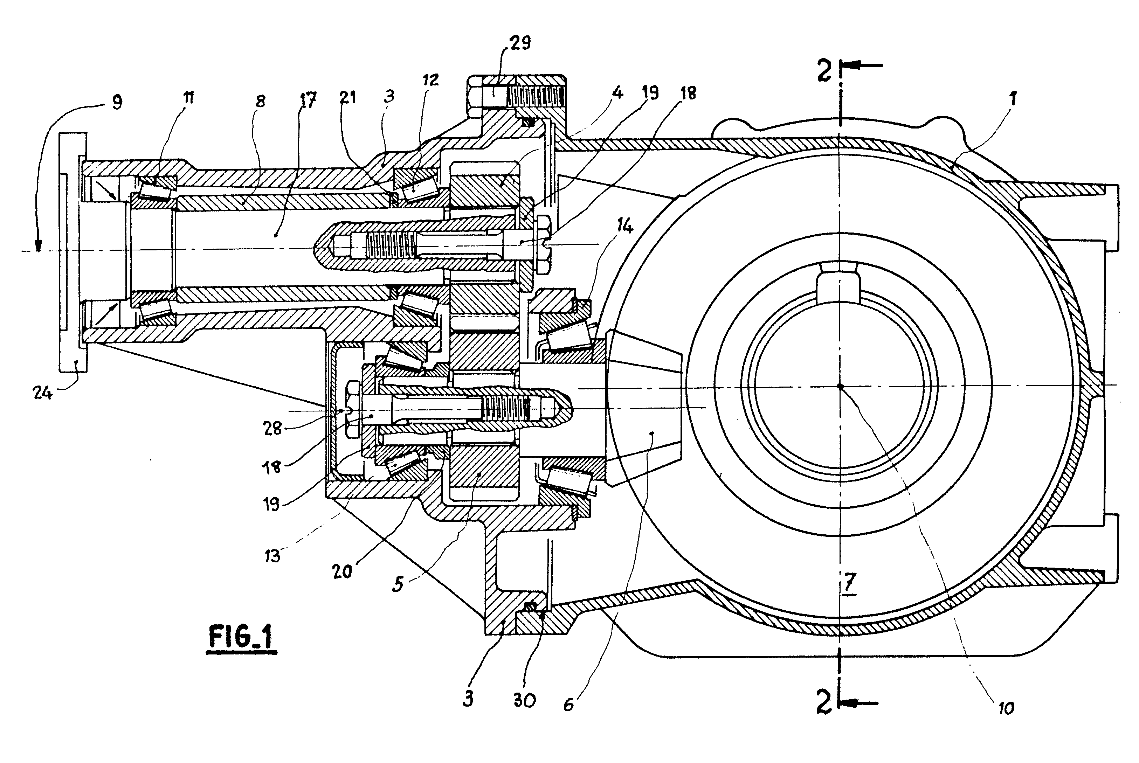

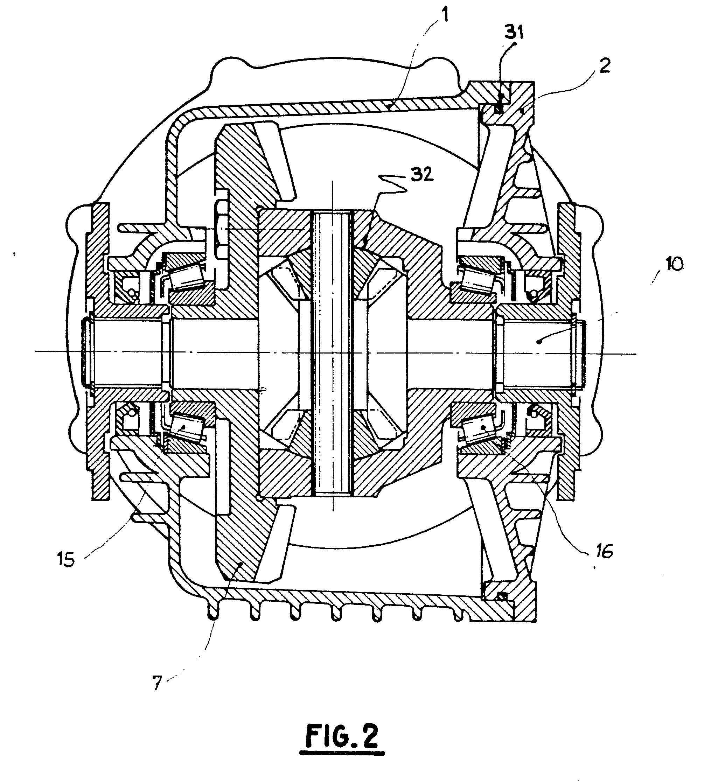

Le dispositif de pont d'essieu selon l'invention qui est représenté sur les figures 1 et 2 comporte un carter de pont 1 sur lequel est monté un flasque 2 et un carter d'entrée 3. Le carter d'entrée 3 est centré dans un alésage 30 du carter de pont 1 et est fixé au moyen de vis 29 sur ledit carter de pont 1. Le flasque 2 est centré dans un alésage 31 du carter de pont 1 et est solidarisé avec ledit carter de pont 1 au moyen de vis de fixation non représentées sur les dessins.

Le pont d'essieu comporte un couple conique avec un pignon d'attaque 6 et une couronne 7. La couronne 7 est montée dans le carter de pont 1 et sur le flasque 2 au moyen des roulements à rouleaux coniques référencés 15 et 16.

Le carter d'entrée 3 reçoit le pignon d'attaque 6 et l'arbre d'entrée 17. Le pignon d'attaque 6 est monté par l'intermédiaire de roulements à rouleaux coniques 13 et 14 et l'arbre d'entrée 17 est supporté par les roulements à rouleaux coniques 11 et 12.

Un couple de pignons de descente 4 et 5 est monté dans le carter d'entrée 3.

Le pignon de descente menant 4 est monté sur l'arbre d'entrée 17 et le pignon de descente mené 5 est monté sur le pignon d'attaque 6 du couple conique. De cette manière, il est possible de moduler, à la demande, la distance dans le plan vertical entre l'axe d'entrée 9 du mouvement et l'axe 10 du différentiel 32. Pour cela, on peut modifier le diamètre respectif des deux pignons de descente 4 et 5, ou disposer l'axe d'entrée 9 du mouvement dans un plan vertical désaxé par rapport au plan vertical de l'axe 28 du pignon d'attaque 6. On peut également agir sur les deux facteurs à la fois : décalage dans le plan vertical et distance entre les axes 9 et 28.

Une cale de réglage 20 est disposée entre le pignon de descente mené 5 et le roulement à rouleaux coniques 13. Le pignon conique 6 est bloqué axialement au moyen d'une vis 18 à haute limite élastique, qui agit sur une rondelle d'appui 19.

Une entretoise 8 et une cale de réglage 21 sont disposées entre les deux roulements à rouleaux coniques 11 et 12. L'arbre d'entrée 17 et l'ensemble des pièces montées sur lui sont bloquées axialement au moyen d'une vis 18 à haute limite élastique qui agit sur une rondelle d'appui 19.

Une bride 24 est aménagée à l'extrémité de l'arbre d'entrée 17 et forme avec ledit arbre d'entrée 17 une seule et même pièce.

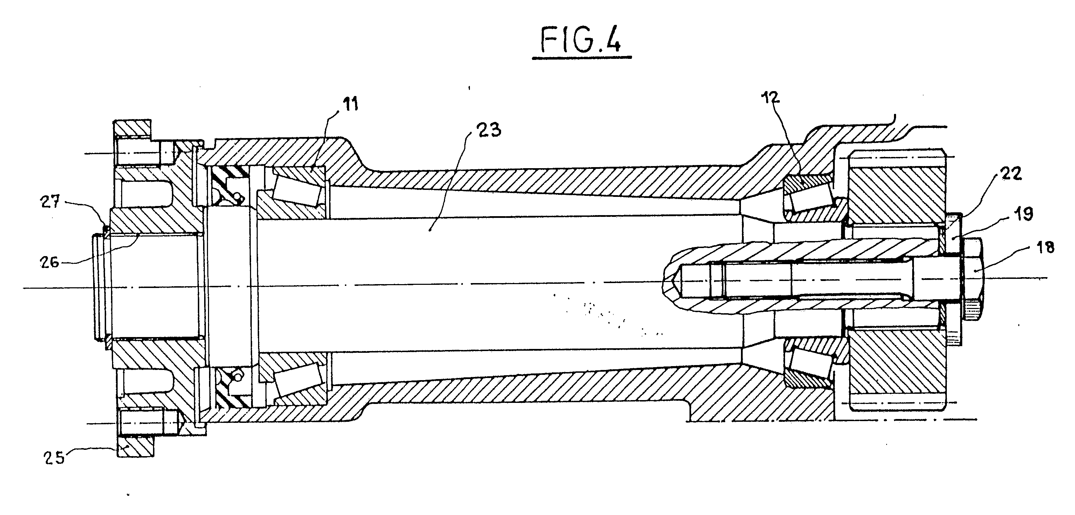

La figure 4 montre un autre mode de réalisation de l'ensemble de l'arbre d'entrée. Une cale de réglage 22 est disposée à l'intérieur du pignon de descente menant 4. L'arbre d'entrée 23 est monté sur les deux roulements à rouleaux coniques 11 et 12, et il est bloqué axialement au moyen d'une vis 18 à haute limite élastique qui agit sur une rondelle d'appui 19.

Une bride 25 est montée à l'extrémité de l'arbre d'entrée 23.

Cette bride 25 est solidaire en rotation au moyen de cannelures 26 avec l'arbre d'entrée 23. Un circlips 27 bloque ladite bride 25 dans le sens axial par rapport audit arbre d'entrée 23.

## Revendications

1 - Dispositif de pont d'essieu de véhicule automobile comporte un couple conique dont la couronne (7) est montée dans un carter de pont (1) et sur un flasque (2) qui se centre et se fixe sur ledit carter de pont (1) caractérisé en ce qu'un carter d'entrée (3) vient fermer ledit carter de pont (1), sur lequel il se centre et se fixe, ledit carter entrée (3) supportant un couple de pignons de descente (4) et (5) par l'intermédiaire de roulements (11, 12, 13,14), le pignon de descente menant (4) étant monté sur un arbre d'entrée (17, 23).
Le pignon de descente mené (5) étant monté sur le pignon d'attaque (6) du couple conique, de manière à pouvoir moduler à la demande la distance dans le plan vertical entre l'axe d'entrée (9) du mouvement et l'axe (10) du différentiel (32).

2 - Dispositif de pont d'essieu selon la revendication 1 caractérisé en ce que le pignon d'attaque (6) est monté sur deux roulements à rouleaux coniques (13) et (14) et est bloqué axialement au moyen d'une vis (18) à haute limite élastique qui coopère avec une rondelle d'appui (19) et une cale de réglage (20).

3 - Dispositif de pont d'essieu selon la revendication 1 caractérisé en ce que l'arbre d'entrée (17) est monté sur deux roulements à rouleaux coniques (11) et (12) et est bloqué axialement au moyen d'une vis (18) à haute limite élastique qui coopère avec une entretoise (8), en cale de réglage (21) et une rondelle d'appui (19).

4 - Dispositif de pont d'essieu selon la revendication 1 caractérisé en ce que l'arbre d'entrée (23) est monté sur deux roulements à rouleaux coniques (11) et (12) et est bloqué axialement au moyen d'une vis (18) à haute limite élastique qui coopère avec une cale de réglage (22) disposée à l'intérieur du pignon de descente menant (4) et une rondelle d'appui (19).

5 - Dispositif de pont d'essieu selon la revendication 1 caractérisé en ce que l'arbre d'entrée (17) forme avec une bride (24) une seule et même pièce.

6 - Dispositif de pont d'essieu selon la revendication 1 caractérisé en ce qu'une bride (25) est montée à l'extrémité de l'arbre d'entrée (23) avec lequel elle est solidaire en rotation au moyen de cannelures (26), un circlips (27) bloquant ladite bride (25) dans le sens axial par rapport audit arbre d'entrée (23).

FIG.1

**FIG.2**

FIG_3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A- 353 450 (TIMKEN)<br>* Page 2, lignes 20-48; figure 1 *<br>--- | 1 | B 60 K   17/16 |
| Y | BE-A- 451 655 (TATRA)<br>* Page 1, ligne 1 - page 3, ligne 4; figure 2 *<br>--- | 1 | |
| A | FR-A-2 558 233 (DANA)<br>* Page 3, ligne 11 - page 5, ligne 15; figure 1 *<br>----- | 1-4,6 | |

DOMAINES TECHNIQUES
RECHERCHES (Int. Cl.4)

B 60 B
B 60 K

**Le présent rapport a été établi pour toutes les revendications**

| Lieu de la recherche | Date d'achèvement de la recherche | Examinateur |
|---|---|---|
| LA HAYE | 19-12-1988 | FOGLIA A. |